# EUROPEAN PATENT APPLICATION

(11) **EP 0 531 005 A2**
(43) Date of publication of application: **10.03.1993**
(21) Application number: 92307498.3
(22) Date of filing: 14.08.1992
(51) Int. Cl.: C08F 2/08

(54) **Micro-emulsions**

(30) Priority: 30.08.1991 GB 9118569
(71) Applicant: IMPERIAL CHEMICAL INDUSTRIES PLC, London SW1P 3JF (GB)
(72) Inventor: Price, Anthony, Runcorn, Cheshire WA7 4PT (GB)
(74) Representative: Nevard, Edward John

(57) **Abstract**

A bicontinuous microemulsion which comprises (i) a first phase comprising a more polar liquid as herein defined, (ii) a second phase comprising a polymerisable oil as herein defined and (iii) an addition-polymerisable surfactant, solid/liquid compositions prepared from the microemulsion and composites prepared from the compositions.

## Description

The present invention relates to microemulsions, particularly bicontinuous microemulsions, solid products prepared therefrom and to the preparation of such microemulsions and solid products.

It is known that a combination of both a water-immiscible organic liquid (hereinafter referred to for convenience as "oil") and an aqueous liquid can be mixed in the presence of one or more surfactants such that an optically clear, optically isotropic liquid is formed. Such a liquid is known in the art as a "microemulsion".

A microemulsion can be distinguished from conventional emulsions by its optical clarity, low viscosity, small domain size and thermodynamic stability. Three types of microemulsions are known, namely oil-in-water, water-in-oil and bicontinuous microemulsions. In bicontinuous microemulsions, the oil forms a first continuous phase, the water forms a second continuous phase and the phases are intermingled such that the properties hereinbefore ascribed to a microemulsion are observed.

In our European Patent Specification 0,449,450 we describe microemulsions wherein both the oil and the surfactant bear addition-polymerisable groups and solid products derived therefrom.

It has been suggested (Lattes et al, Colloids and Surfaces 1989, 35, 221-235) that formamide may be used instead of water in certain microemulsions.

We have now prepared bicontinuous microemulsions which comprise an addition-polymerisable first organic liquid (hereinafter referred to for convenience as "polymerisable oil"), a second organic liquid which is more polar than and immiscible and non-polymerisable with the polymerisable oil (hereinafter referred to for convenience as "more polar liquid") and an addition-polymerisable surfactant and found that such microemulsions can be converted into solid products wherein the continuous solid phase comprises the polymerised oil and wherein the more polar liquid is present as a continuous liquid phase.

According to a first aspect of the present invention there is provided a bicontinuous microemulsion which comprises (i) a first phase comprising a more polar liquid as hereinbefore defined, (ii) a second phase comprising a polymerisable oil as hereinbefore defined and (iii) an addition-polymerisable surfactant.

The more polar liquid should have the following properties:
(i) a high polarity (high dielectric constant),
(ii) a high solvating power and
(iii) be highly structured.

As examples of suitable more polar liquids may be mentioned inter alia alcohols, e.g. n-butanol, n-propanol or preferably polyols, e.g. ethylene glycol, glycerol or more preferably amides, e.g. formamide.

As examples of suitable polymerisable oils may be mentioned inter alia unsaturated hydrocarbons, e.g. styrene; halo-compounds, e.g. vinyl chloride; or preferably alkyl esters of (alk)acrylates, e.g. n-butyl methacrylate, unsaturated urethanes, e.g. Modar ((RTM), ex ICI); unsaturated polyesters; or aromatic/aldehyde oligomers with addition-polymerisable unsaturated end groups as are more fully described in our European Patent Specification No 0,112,650, e.g. derived from diphenyl oxide, formaldehyde and methacrylic acid, i.e. methacrylate-CH₂(Ar-CH₂)ₙ-methacrylate wherein Ar represents PhOPh where Ph represents phenylene.

As examples of suitable addition-polymerisable surfactants may be mentioned inter alia non-ionic, or ionic, i.e. anionic or cationic, surfactants, for example quaternary ammonium compounds, or tertiary amine salts, e.g.

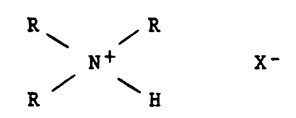

Where the cationic surfactant is a quaternary ammonium compound it is preferably present as the salt of a hydrohalic acid.

The addition-polymerisable group on the surfactant is preferably an (alk)acrylate, more preferably a methacrylate but we do not exclude the possibility that it may be derived from an olefinic group, e.g. an alkene or styrene.

Where the surfactant is cationic, the addition-polymerisable group on the surfactant may be present adjacent the cation, although it is often preferred that it is distant therefrom.

It is often preferred that the surfactant has the General Formula I 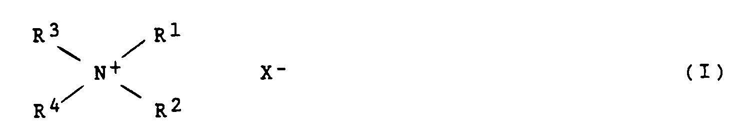
wherein
X⁻ is a suitable counter-ion;
R¹ and R², which may be the same or different, are C₁₋₃ carbon groups;
R³ and R⁴, which may be the same or different, are C₁₋₃₀ carbon groups;
with the proviso that at least one of R¹, R², R³ and R⁴ bears an addition-polymerisable group.

X⁻ is preferably an inorganic anion, particularly preferably a halide and more particularly preferably bromide.

Preferably both R¹ and R² are methyl.

Preferably R³ is a chain of C₃-C₁₅ carbon atoms.

It is often preferred that R⁴ is a chain of about eleven carbon atoms bearing an addition-polymerisable group, e.g. a methacrylate.

The addition-polymerisable surfactant will be chosen in the light of inter alia the nature, particularly hydrophobicity, of the polymerisable oil and the more polar liquid. For example, as the polarity of the polymerisable oil is decreased the hydrophobicity of the surfactant can often be increased. We have found that the following combinations of polymerisable oil and surfactant may be used, particularly where the more polar liquid is for example formamide.

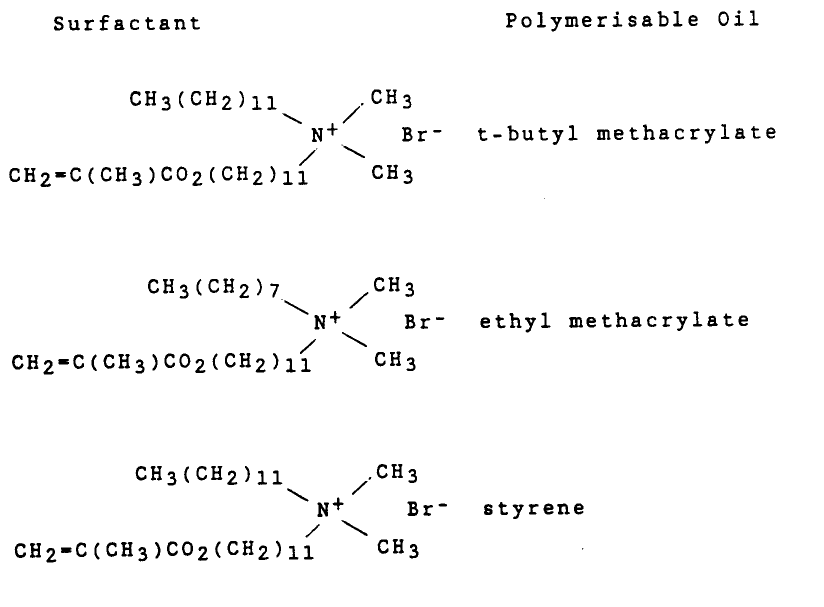

In the micro-emulsion of the present invention the concentrations of the components are typically as follows, expressed as % w/w:

| | |
|---|---|
| more polar liquid | 5-50 |
| polymerisable oil | 10-30 |
| polymeriable surfactant | 25-70 |

wherein the combined % w/w's are substantially 100%.

Whereas we do not exclude the possibility that the polymerisable oil and the addition-polymerisable surfactant may separately homopolymerise, it is preferred that they are copolymerisable.

Typically a major portion (i.e. more than 50%) of the surfactant in the bicontinuous microemulsion is polymerisable. Whereas we do not exclude the possibility that, in addition to the polymerisable surfactant, a further surfactant which is non-polymerisable, e.g. (C₁₂H₂₅)₂N⁺(CH₃)₂Br⁻, may be present, this is not preferred.

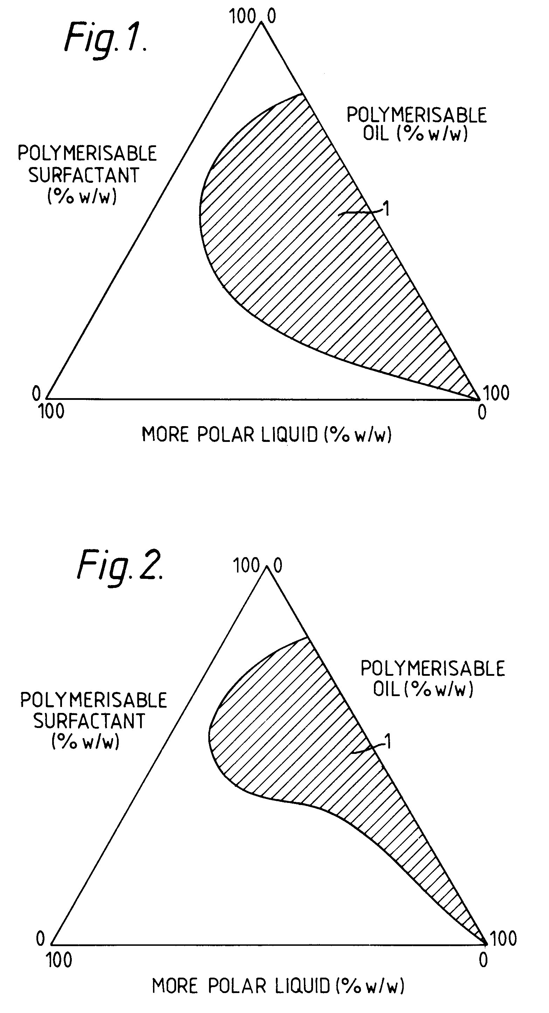

The skilled man will be able to determine appropriate ratios for the components in the bicontinuous microemulsion by simple experiment. For example, in a bicontinuous microemulsion according to the present invention wherein the polymerisable oil is butyl methacrylate, the more polar liquid is formamide and the surfactant is 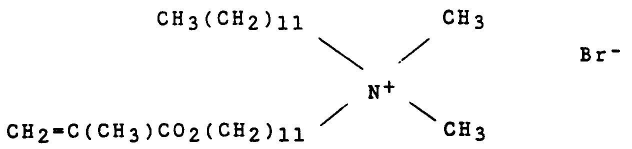
suitable compositions which may be polymerised to form a bicontinuous solid are illustrated in Figure 1 of the drawings appended hereto.

Whereas we do not exclude the possibility that the more polar liquid in the bicontinuous microemulsion according to the present invention may be a neat liquid, it is often preferred that it is a solution of a solute in a suitable solvent, which solute may be a liquid or solid.

Where the more polar liquid is a solution a suitable concentration of the solute therein for a particular application may be found by the skilled man by simple experiment.

Where a solute is present in the bicontinuous microemulsion it may be chemically reactive, e.g. water-sensitive. As examples of such water-sensitive solutes may be mentioned inter alia metal alkoxides, e.g. titanium tetra-isopropoxide, aluminium tri-isopropoxide and metal alkyls.

The bicontinuous microemulsion according to the present invention may be polymerised by methods known in the addition-polymerisation art, e.g. by reaction with a suitable free radical initiator such that a solid composition is produced. For example, it may be polymerised by reaction with azodiisobutyronitrile (ADIB), a suitable peroxide, e.g. a room-temperature curing peroxide, or a photo-initiator, as is more fully described hereinafter.

According to a second aspect of the present invention there is provided a solid composition comprising a continuous solid phase and a continuous liquid phase which composition appears transparent to the naked eye characterised in that the continuous liquid phase comprises a more polar liquid as hereinbefore defined.

The continuity of the continuous liquid phase in the solid composition of the present invention may be demonstrated by determining the electrical conductivity of the solid composition.

The size of the liquid particles in the continuous liquid phase in a solid composition according to the present invention (and hence of the pores prepared by removal of the continuous liquid phase therefrom) is substantially uniform. We have found by transmission electron microscopy that a uniform pore size of typically between 2 nm and 50 nm can be obtained. By choice of inter alia a suitable polymerisable oil, more polar liquid and relative proportions thereof the skilled man, by simple experiment, will be able to prepare a solid composition having a desired pore size.

The continuity of the continuous solid phase in the solid composition of the present invention may be demonstrated by methods known in the art, for example mechanical tests methods, e.g. tensile tests.

The continuous solid phase in the solid composition may be rigid, e.g. a polymer below its Tg or cross-linked; or soft or rubbery, e.g. a polymer above its Tg. By choice of inter alia a suitable polymerisable oil, more polar liquid and relative proportions thereof the skilled man, by simple experiment, will be able to prepare a solid composition having desired rigidity/flexibility.

It will be appreciated that the tendency for the more polar liquid to evaporate from the solid composition according to the second aspect of the present invention will depend on inter alia the vapour pressure of that liquid and the porosity of the solid composition. Accordingly, by choice of a suitable more polar liquid the rate at which evaporation thereof from the solid composition may be controlled or even prevented. Where it is desired to retain the more polar liquid in the liquid phase of the solid composition, the solid composition may be treated, for example kept in a suitable environment, e.g. immersed in that liquid, or coated with a suitable impermeable coating, e.g. a polymer.

Where it is desired to remove the more polar liquid from the liquid phase of the solid composition according to the present invention such removal may be accelerated by the application of a vacuum thereto or by treatment of the solid composition with a solvent for the more polar liquid.

Solid compositions according to the present invention are useful in separation processes, e.g. reverse osmosis and purification of proteins, or in processes requiring controlled permeability, e.g. sustained release of drugs or insecticides.

The method according to the present invention as hereinafter defined is useful in the preparation of transparent polymeric solids containing very fine particles of inorganic solids dispersed therein, e.g. titanium oxide, aluminium oxide, copper sulyhide or metals.

The solid composition according to the second aspect of the present invention may contain a chemically reactive substance. Furthermore, we have found that where a chemically reactive substance is present it may be reacted with a suitable reagent to produce very fine particles in situ. As examples of chemical reactions which the chemically active substance may undergo may be mentioned inter alia oxidation, reduction, metathesis, reaction with a protic liquid, e.g. hydrolysis or alcoholysis, or photolysis.

Where the solid composition according to the second aspect of the present invention contains a chemically reactive substance it is preferably prepared by the polymerisation of a bicontinuous microemulsion according to the first aspect of the present invention wherein the chemically reactive substance is present, eg in solution, in the polymerisable oil or preferably in the more polar liquid. However, we do not exclude the possibility that the chemically reactive substance may be infused, for example in solution, into a pre-prepared solid composition according to the second aspect of the present invention, or into a dried solid prepared by removing the continuous liquid phase from a solid composition according to the present invention, or into a solid composition described in our aforementioned EP 0,449,450.

As examples of suitable chemically reactive substances may be mentioned inter alia alkyls, alkoxides, salts. For example, an alkoxide or an alkyl could be reacted with water and an alcohol respectively to prepare particles of an oxide or alkoxide in situ; a salt could be reacted metathetically.

We have found that the size and/or crystallinity of the particles prepared in situ from the chemically reactive substance is restricted by inter alia the size of the pores in the solid composition according to the second aspect of the present invention. The size of the particles of a particular material so prepared is often smaller than that obtainable by conventional preparative techniques for preparing such particles, eg precipitation from solution. The crystallinity of the particles prepared in situ may be reduced or even eliminated. For example, we have prepared non-crystalline copper sulphide.

We have found that the particles may be sufficiently small such that they do not unduly reduce the transparency of the composition. For example, we have prepared a composite containing titanium dioxide particles dispersed in polymethyl methacrylate which, after removal of the continuous liquid phase, is transparent to the naked eye but absorbs UV radiation.

Furthermore, the particles prepared in situ from the chemically active substance tend to be of uniform size.

Typically that size is between 2 nm and 50 nm depending on the dimension of the pores in which they are prepared.

A composite containing ultra-fine metallic particles, eg gold, could be prepared by this process. Such metal-containing composites tend to have commercially useful electrical conductivities.

According to the present invention there is provided a composite comprising an organic polymer matrix and inorganic or metallic particles dispersed therein characterised in that the particles are present in continuous pores in the matrix.

According to a further aspect of the present invention there is provided a composite prepared by reacting a chemically reactive substance in the liquid phase of the solid composition according to the second aspect of the present invention with a suitable reagent.

According to a yet further aspect of the present invention there is provided a method for preparing a solid composition according to the second aspect of the present invention by treating a bicontinuous microemulsion according to the first aspect of the present invention with an addition-polymerisation catalyst under polymerisation conditions therefor.

It will be appreciated that in the preparation of a solid composition according to the second aspect of the present invention by the method according to the yet further aspect of the present invention, (A) the reaction conditions will be chosen such that the configuration of the bicontinuous microemulsion is retained during the process and (B) a polymerisable oil will be used which is capable of producing a polymerised product which has desired mechanical properties , for example a Tg above room temperature or is cross-linked with a suitable monomer in the bicontinuous microemulsion used in the method to afford a rigid product.

Where a photo-initiator composition is used in the method according to the yet further aspect of the present invention it generates free-radicals on exposure to a source of electro-magnetic radiation which act as initiators for the addition polymerisation of both the polymerisable oil and the one or more addition-polymerisable surfactants and preferably for the copolymerisation thereof.

The photo-initiator composition, where it is used, may consist of a single compound or it may comprise at least two components. Typically, it comprises any of the known photo-initiator systems which are used to initiate addition-polymerisation of polymerisable olefinically unsaturated monomers. As examples of such compositions may be mentioned inter alia (a) mixtures of Michler's ketone and benzil or preferably benzophenone, typically in a weight ratio of about 1:4; (b) the coumarin-based photo-initiator systems described in US 4,289,844, (c) combinations of hexaarylbisimidzoles and leuco dyes, (d) cyclohexadiene-leuco dye systems described in US 4,241,869, or (e) systems based on dimethoxyphenylacetophenone (benzil dimethyl ketal) and/or diethoxyacetophenone or (f) preferably mixtures of amines and ketones as disclosed in our UK Patent Specifications Nos 1,408,265 and 1,494,903, e.g. camphorquinone, flurenone or morpholine and N,N-dimethylaminoethyl methacrylate, typically in a weight ratio of about 1:1; or (g) more preferably mixtures of a light-sensitive initiator system and a peroxide, for example an α-diketone, a reducing agent capable of reducing the ketone when the latter is in an excited state, e.g. an organic amine, and a peroxide, as disclosed in our European Patent Specifications Nos 0,059,649, and 0,090,493, the disclosures in which are incorporated herein by way of reference.

The ketone may, for example, be present in the microemulsion in the concentration 0.1% to 2% by weight of the polymerisable material in the composition although concentrations outside this range may be used if desired. Preferably the α-diketone is present in a concentration of 0.1% to 1% by weight of the ethylenically unsaturated materials in the composition.

The ketones should be soluble in the polymerisable material, and the above concentrations refer to solution concentrations.

The reducing agent is preferably present in the composition in concentrations in the range 0.01% to 2% by weight of the polymerisable material although concentrations outside this range may be used if desired.

Organic peroxides suitable for use in the method according to the yet further aspect of the present invention include those having the formula R²-O-O-R² in which the groups R² which may be the same or different, are hydrogen, alkyl, aryl, or acyl groups, no more than one of the groups R² being hydrogen. The term acyl means groups having the formula Rⁿ-CO- in which Rⁿ is an alkyl, aryl, alkoxy or aryloxy group. The terms alkyl and aryl include substituted alkyl and aryl.

Examples of organic peroxides suitable for use in the method of the present invention include diacetyl peroxide, dibenzoyl peroxide, ditertiary butyl peroxide, dilauroyl peroxide, tertiary-butyl perbenzoate, ditertiary-butyl-cyclohexyl perdicarbonate.

The organic peroxide may be, for example, present in the microemlusion in the range 0.1% to 20%, preferably 0.5% to 5%, by weight of the polymerisable material in the microemulsion although concentrations outside this range may be used if desired.

The reactivity of a peroxide is often measured in terms of its half-life temperature, i.e. within ten hours at that temperature half of the oxygen has been made available.

The peroxides used in the method according to the present invention preferably have ten-hour half-life temperatures of less than 150°C, more preferably less than 110°C.

A preferred photo-initiator composition comprises camphorquinone, N,N′-dimethylaminoethyl methacrylate and tert-butyl perbenzoate, preferably in the weight ratio about 1:1:1.

Bicontinuous microemulsions according to the first aspect of the present invention are further illustrated by reference to the drawings appended hereto which show, by way of example only, a three-phase diagram for the concentrations of more polar liquid,polymerisable oil and addition-polymerisable surfactant for a certain microemulsion.

In Figure 1, the polymerisable oil is butyl methacrylate, the more polar liquid is formamide and the addition-polymerisable surfactant is methacryloyloxyundecyl-dodecyl-dimethylammonium bromide.

In Figure 2, the polymerisable oil is styrene, the more polar liquid is formamide and the addition-polymerisable surfactant is methacryloyloxyundecyl-dodecyl-diethylammonium bromide.

The hatched zones 1 of Figures 1 and 2 indicate the range of concentrations of certain bicontinuous microemulsions which we have polymerised to form solid compositions according to the second aspect of the present invention.

The present invention is further illustrated by reference to the following Examples.

### Example 1

This Example illustrates a solid composition according to the second aspect of the present invention.

A bicontinuous microemulsion consisting of formamide (20% w/w), distilled monomers (40% w/w; n-butyl methacrylate and diethylene methacrylate in weight ratio 19:1), copolymerisable surfactant 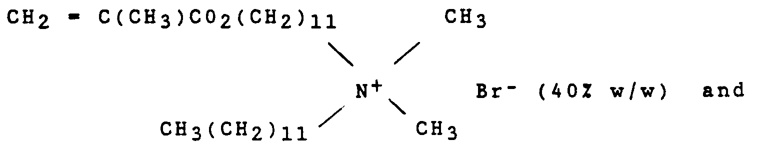
and a photocuring catalyst system consisting of camphor quinone (0.75% w/w, on monomer) and dimethylaminoethyl methacrylate (0.75% w/w, on monomer) in a glass vial were exposed to electromagnetic radiation of 470nm from a cold light source (Schott Model KL 1500) with emission of 20 M Lux for 15 minutes at 20°C.

The product was an optically clear solid material.

### Example 2

This Example illustrates a further solid composition according to the second aspect of the present invention.

A bicontinuous microemulsion consisting of formamide (20% w/w), distilled monomers (40% w/w; styrene and divinyl-benzene in weight ratio of 39:1), copolymerisable surfactant used in Example 1 (40% w/w).
and catalyst α-azo-iso-butyronitrile (1% on monomer) in a glass vial was heated at 85°C for 24 hours.

The product was an optically clear solid material.

### Example 3

This Example illustrates a composite according to the present invention.

A bicontinuous microemulsion containing the following components (% w/w)

| | |
|---|---|
| distilled styrene (10% w/w divinyl benzene) | 64.5 |
| surfactant used in Example 1 | 19.3 |
| dried formamide | 12.9 |
| titanium IV iso-propoxide | 3.3 |

was heated in a sealed glass reactor at 80°C for two hours. A clear glassy polymer was produced.

A sample of the clear glassy polymer was soaked for 24 hours in a mixture of water and formamide (50:50 by volume), a clear glassy polymer was obtained containing titanium dioxide particles (from hydrolysis of the titanium IV iso-propoxide), dispersed in the continuous pores in the polymer.

### Examples 4-7

These Examples illustrate composites according to the present invention.

A sample of the solid composition prepared in Example 1 was immersed in titanium (IV) isopropoxide, either neat or in solution as shown in Table 1, for 24 hours. The sample was then immersed in water or a water/ethanol mixture, as shown in Table 1, to hydrolyse the isopropoxide which had infused into the sample.

The products were optically transparent. Transmission electron microscopy confirmed that the size of the precipitated titanium dioxide particles was confined by the dimensions of the pores in the solid composition.

**TABLE 1**

| Example | Treatment with Ti(IV) i-propoxide | Treatment with protic solvent |
|---|---|---|
| 4 | Neat | Water/EtOH |
| 5 | EtOH soln | water/EtOH |
| 6 | Neat | Water |
| 7 | EtOH soln | Water |

### Example 8

This Example illustrates a further composite according to the present invention.

A sample of the solid composition prepared in Example 1 was immersed in a 0.5M copper perchlorate solution for 24 hours. The solid composition containing the infused copper perchlorate was then immersed in a solution of sodium sulyhide. Copper sulyhide particles precipitated.

The size of the precipitated copper sulphide particles was confined by the dimensions of the pores in the solid composition.

X-ray absorption spectroscopy showed that the particles of copper sulyhide were non-crystalline and were significantly different from known copper sulphide particles prepared conventionally. In the non-crystalline copper sulyhide, the immediate co-ordination number is significantly different and there is a higher proportion of short copper-sulyhide contacts due to an increase in the proportion of three co-ordinate copper atoms in the copper sulphide.

### Example 9

This Example illustrates a metal-containing composite according to the present invention.

A sample of the solid composition prepared in Example 1 was immersed in an aqueous solution of chlorolauric acid (0.5 mmol.dm³). The gold solution was allowed to diffuse into the solid composition for 24 hours, the solid composition became yellow/orange in colour.

The yellow/orange sample was then exposed to UV radiation (Spectronics lamp; intensity 9000 µw/cm²) for 6 hours to reduce the metal cation complex to metal [the method of Kanjiro Toricoe and Kunio Esumi (Langmuir, 1992, Vol 8, 59-63)].

The sample became red and the presence of precipitated gold particles was confirmed by UV spectroscopy; the absorption peak shifted from 320 nm (complex) to 540 nm (gold).

## Claims

1. A bicontinuous microemulsion which comprises (i) a first phase comprising a more polar liquid as herein defined, (ii) a second phase comprising a polymerisable oil as herein defined and (iii) an addition-polymerisable surfactant

2. A bicontinuous microemulsion as claimed in Claim 1 wherein the more polar liquid is a polyol.

3. A bicontinuous microemulsion as claimed in Claim 1 wherein the more polar liquid is an amide.

4. A bicontinuous micremulsion as claimed in Claim 3 wherein the amide is formamide.

5. A bicontinuous micremulsion as claimed in Claim 1 wherein the polymerisable oil is an alkyl ester of on an (alk)acrylate.

6. A bicontinuous microemulsion as claimed in Claim 1 wherein the addition-polymerisable surfactant is an (alk)acrylate.

7. A bicontinuous microemulsion as claimed in Claim 1 wherein the more polar liquid is formamide and the polymerisable surfactant and the polymerisable oil are chosen from the following combinations:

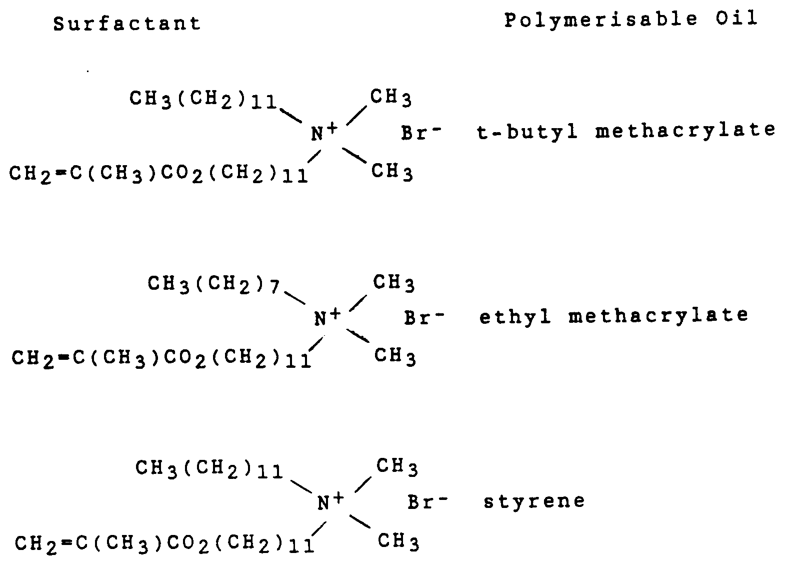

8. A bicontinuous microemulsion as claimed in Claim 1 wherein the concentrations of the components, expressed as %w/w:
more polar liquid 5-50
polymerisable oil 10-30
polymerisable surfactant 25-70.

9. A bicontinuous microemulsion as claimed in Claim 1 wherein the more polar liquid is a solution of a solute in a suitable solvent.

10. A bicontinuous microemulsion as claimed in Claim 9 wherein the solute is chemically reactive.

11. A solid composition comprising a continuous solid phase and a continuous liquid phase which appears transparent to the naked eye characterised in that the continuous liquid phase comprises a more polar liquid as herein defined.

12. A solid composition as claimed in Claim 11 wherein the more polar liquid is a polyol.

13. A solid composition as claimed in Claim 12 wherein the more polar liquid is an amide.

14. A solid composition as claimed in Claim 13 wherein the amide is formamide

15. A solid composition as claimed in Claim 11 wherein the continuous solid phase is a poly(alk)acrylate.

16. A solid composition as claimed in Claim 11 wherein the more polar liquid is a solution of a solute in a suitable solvent.

17. A solid composition as claimed in Claim 16 wherein the solute is chemically reactive.

18. A composite comprising an organic polymer matrix and inorganic or metallic particles dispersed therein characterised in that the particles are present in continuous pores in the matrix.

19. A composite comprising an organic polymer matrix and inorganic or metallic particles dispersed therein prepared by
a) chemically reacting the chemically reactive solute in the solid composition claimed in Claim 17 with a suitable reagent; and
b) removing the more polar liquid therefrom.

20. A composite as claimed in Claim 18 or 19 which is optically clear and comprises ultra-fine inorganic particles dispersed in the continuous solid phase.

21. A composite as claimed in Claim 20 wherein the continuous solid phase is a poly (alk)acrylate.

22. A composite as claimed in Claim 20 wherein the ultra-fine inorganic particles are titanium dioxide or iron oxide.

23. An electrically conducting composite as claimed in Claim 18 or 19 containing deposited metallic particles.
